# EUROPÄISCHE PATENTSCHRIFT

(11) **EP 2 478 614 B1**
(45) Veröffentlichungstag und Bekanntmachung des Hinweises auf die Patenterteilung: **23.03.2016**
(21) Anmeldenummer: 10734742.9
(22) Anmeldetag: 21.07.2010
(51) Int. Cl.: H02K 1/27

(54) **ELEKTRISCHE MASCHINE MIT PERMANENTMAGNETEN SOWIE VERFAHREN ZUM KALIBRIEREN EINER ELEKTRISCHEN MASCHINE**
ELECTRICAL MACHINE COMPRISING PERMANENT MAGNETS AND METHOD FOR CALIBRATING AN ELECTRICAL MACHINE
MACHINE ÉLECTRIQUE À AIMANTS PERMANENTS ET PROCÉDÉ D'ÉTALONNAGE D'UNE MACHINE ÉLECTRIQUE

(30) Priorität: 15.09.2009 DE 102009029477
(43) Veröffentlichungstag der Anmeldung: 25.07.2012
(73) Patentinhaber: Robert Bosch GmbH, 70442 Stuttgart (DE)
(72) Erfinder: EVANS, Steven Andrew, 77815 Buehl (DE)
(86) Internationale Anmeldenummer: PCT/EP2010/060535
(87) Internationale Veröffentlichungsnummer: WO 2011/032751

(56) Entgegenhaltungen:
- WO-A1-94/19855
- JP-A- 2001 346 347

## Beschreibung

### Technisches Gebiet

Die Erfindung betrifft elektrische Maschinen, bei denen ein Erregermagnetfeld von Permanentmagneten bereitgestellt wird. Die Erfindung betrifft weiterhin Verfahren zum Kalibrieren einer elektrischen Maschine zum Reduzieren von Abweichungen von Eigenschaften von elektrischen Maschinen gleicher Bauart.

### Stand der Technik

Beim Aufbau von elektrischen Maschinen können zum Erzeugen eines Erregermagnetfelds Permanentmagneten verwendet. Insbesondere bei Synchronmotoren befinden sich die Permanentmagneten an einem beweglichen Läufer, bei rotatorischen Synchronmotoren in dem Rotor des Synchronmotors. Um Synchronmotoren mit höherer Drehmomentendichte zu erzeugen, werden die Permanentmagneten häufig aus einem Seltene-Erden-Material, z.B. einer Neodym-Eisen-Bor-Legierung (NdFeB), herausgeschnitten. Die Toleranz der Remanenz dieser Permanentmagneten beträgt üblicherweise ± 3 %. Die Toleranz der Remanenz kann eine Folge von leichten Abweichungen der Mischungsverhältnisse der pulverförmigen Bestandteile, aus denen das Material der Permanentmagneten hergestellt wird, sowie von von Los zu Los variierenden Abweichungen der Brenntemperatur bei der thermischen Behandlung des Materials für die Permanentmagneten sein.

Die magnetischen Flüsse in einer elektrischen Maschine sind direkt proportional zur Remanenz der Permanentmagneten, wenn der magnetische Kreis der elektrischen Maschine nicht gesättigt ist. Daher können also elektrische Maschinen mit verschiedenen Losen von Permanentmagneten verschiedene Flüsse aufweisen und sich somit etwas in ihren Eigenschaften unterscheiden, d.h. z.B. unterschiedliche Drehmoment-Drehzahl-Kennlinien aufweisen. Es ist jedoch wünschenswert, einen bestimmten Typ einer elektrischen Maschine mit möglichst identischen Eigenschaften aufzubauen, obwohl Abweichungen der Remanenzen in verschiedenen Losen von Permanentmagneten auftreten.

Es ist Aufgabe der vorliegenden Erfindung, eine elektrische Maschine zur Verfügung zu stellen, die es ermöglicht, die Toleranzen der Remanenz von Permanentmagneten zu kompensieren, um unabhängig von diesen Toleranzen elektrische Maschinen mit identischen Eigenschaften herzustellen.

Die JP 2001 346 347 zeigt den Rotor einer elektrische Maschine mit einem Körper aus einem magnetischen Material mit sich in axialer Richtung erstreckenden Taschen zur Aufnahme von Magneten. Die axialen Endbereiche der Taschen sind in Richtung senkrecht zur Erstreckungsrichtung erweitert, sodass die Magnete in den Endbereichen in diese Erweiterungen hineinragen.

### Offenbarung der Erfindung

Diese Aufgabe wird durch die Maschinenkomponente für eine elektrische Maschine gemäß Anspruch 1 sowie durch die elektrische Maschine und das Verfahren zum Ausgleichen von Toleranzen bei der Remanenz von Permanentmagneten gemäß Anspruch 10 gelöst. Weitere vorteilhafte Ausgestaltungen sind in den abhängigen Ansprüchen angegeben.

Gemäß einem ersten Aspekt ist eine Komponente für eine elektrische Maschine mit einem Körper aus einem magnetischen Material vorgesehen, wobei mindestens eine sich in axialer Richtung erstreckenden Tasche in dem Körper vorgesehen ist, die eine Kopplungsfläche aufweist, um bei einem in die Taschen so eingesetzten Permanentmagneten, dass seine Polfläche an der Kopplungsfläche anliegt, ein Erregermagnetfeld außerhalb des Körpers bereitzustellen, wobei die Tasche an einem Ende des Körpers in axialer Richtung eine Verbreiterung in einer Richtung senkrecht zur Kopplungsfläche aufweist, so dass ein einzusetzender Permanentmagnet je nach Positionierung in der Tasche mit einem variablen Anteil einer seiner Polflächen in die Verbreiterung hineinragt.

Insbesondere kann die Komponente mindestens einen Permanentmagneten aufweisen, der in der Tasche angeordnet ist, um das Erregermagnetfeld bereitzustellen, wobei zumindest ein Teil der Polfläche des Permanentmagneten an der Kopplungsfläche anliegt; wobei die Tasche in der axialen Richtung länger ist als der in der Tasche angeordnete Permanentmagnet, und wobei der Permanentmagnet in der axialen Richtung positionierbar ist, um den Anteil der Polfläche, der in die Verbreiterung hineinragt, festzulegen.

Eine Idee der obigen Komponente mit dem Permanentmagneten besteht darin, vorzusehen, dass das von der Komponente bewirkte magnetische Erregerfeld eine vorgegebene Feldstärke aufweist, obwohl die für den Aufbau der Komponente benötigten Permanentmagneten einer Bauteil-Streuung unterliegen. Durch das Vorsehen einer Ausnehmung zwischen einem Teil der Polfläche des Permanentmagneten und einem durch den Körper gebildeten Rückschlussbereich und einer dadurch gebildeten Verbreiterung der Tasche in axialer Richtung an einem Ende des Körpers kann die Stärke des magnetischen Erregerfelds, das durch die Komponente bereitgestellt wird, angepasst werden. Die Ausnehmung erstreckt über einen Teilbereich der Polfläche des Permanentmagneten. Durch Verschieben der Position der Polfläche des Permanentmagneten auf der Kopplungsfläche in die Verbreiterung hinein oder aus dieser heraus kann somit der Anteil der Fläche, mit der die Polfläche des Permanentmagneten auf der Kopplungsfläche anliegt, eingestellt werden, insbesondere so dass das durch den Permanentmagneten bereitgestellte Erregermagnetfeld eine vorgegebenen Feldstärke aufweist.

Weiterhin Komponente kann die Tasche an einem Ende des Körpers in der Richtung nach außen offen sein.

Gemäß einer weiteren Ausführungsform kann die Verbreiterung der Tasche einseitig oder zweiseitig vorgesehen sein.

Ferner kann die Verbreiterung als ein Abschnitt der Tasche vorgesehen sein, der von der Kopplungsfläche stufenförmig abgesetzt ist.

Gemäß einer Ausführungsform kann der Permanentmagnet in der Tasche nach dessen Positionierung fixiert sein.

Weiterhin kann die Position des Permanentmagneten in der Tasche abhängig von seiner Remanenz gewählt sein.

Es kann vorgesehen sei, dass die Komponente einem Läufer einer elektrischen Maschine entspricht, wobei die Komponente einen dem Permanentmagneten zugeordneten Polschuh zur Abgabe des Magnetfelds aufweist, wobei die Verbreiterung der Tasche auf einer Seite erfolgt, die einer dem Polschuh zugewandten Seite gegenüberliegt.

Insbesondere kann die Komponente einem Rotor einer Synchronmaschine entsprechen, wobei die Permanentmagneten im Wesentlichen mit Polflächen in Umfangsrichtung, als Speichenmagnete oder bezüglich des Polschuhs geneigt angeordnet sein können.

Gemäß einem weiteren Aspekt ist eine elektrische Maschine, insbesondere eine Synchronmaschine, mit der obigen Komponente vorgesehen.

Gemäß einem weiteren Aspekt ist ein Verfahren zum Herstellen einer elektrischen Maschine vorgesehen. Das Verfahren umfasst die folgenden Schritte:
- Bereitstellen der obigen Komponente;
- Ermitteln der Remanenz eines in die Tasche der Komponente einzusetzenden Permanentmagneten;
- Einsetzen des Permanentmagneten in die Tasche, so dass ein von der ermittelten Remanenz abhängiger Anteil seiner Polfläche in die Verbreiterung hineinragt.

Das obige Verfahren dient also zum Einstellen der Stärke des von der Komponente bewirkten magnetischen Erregerfelds, wobei die Streuungen der Remanenzen von für den Aufbau der Komponente verwendeten Permanentmagneten berücksichtigt werden. Durch geeignete Positionierung bzw. Platzierung des Permanentmagneten in der Tasche der Komponente kann der Anteil, mit dem die Polfläche des Permanentmagneten an der Kopplungsfläche anliegt, eingestellt werden.

Weiterhin kann die ermittelte Remanenz des Permanentmagneten mit einem Referenzwert verglichen werden, wobei der Referenzwert einer Positionierung des Permanentmagneten in der Tasche entspricht, bei der ein vorbestimmter Anteil der entsprechenden Polfläche in die Verbreiterung hineinragt, wobei bei einem Überschreiten des Referenzwertes durch die ermittelte Remanenz der Anteil der entsprechenden Polfläche, der in die Verbreiterung hineinragt, vergrößert wird, und bei einem Unterschreiten des Referenzwertes durch die ermittelte Remanenz der Anteil der entsprechenden Polfläche, der in die Verbreiterung hineinragt, verringert wird.

Gemäß einer weiteren Ausführungsform kann ein Maß des Vergrößerns bzw. des Verkleinerns des Anteils der entsprechenden Polfläche abhängig von der Differenz zwischen der ermittelten Remanenz und dem Referenzwert gewählt werden.

### Kurzbeschreibung der Zeichnungen

Bevorzugte Ausführungsformen werden nachfolgend anhand der beigefügten Zeichnungen näher erläutert. Es zeigen:
- Figur 1: eine Darstellung eines Querschnitts einer permanentmagneterregten Synchronmaschine gemäß dem Stand der Technik;
- Figur 2: eine Rotoranordnung der Synchronmaschine der Figur 1;
- Figur 3: eine Blechlamelle zum Aufbau der Rotoranordnung der Figur 2;
- Figur 4: eine schematische Darstellung des Feldlinienverlaufs in einem Ausschnitt der Rotoranordnung des Synchronmotors der Figur 1;
- Figur 5: ein Diagramm zur Darstellung der Drehmomentverläufe einer Synchronmaschine gemäß Figur 1 bei Verwendung von Permanentmagneten mit voneinander abweichenden Remanenzen;
- Figur 6: eine Querschnittsdarstellung eines Synchronmotors gemäß einer Ausführungsform;
- Figur 7: eine räumliche Darstellung einer Rotoranordnung des Synchronmotors der Figur 6 mit eingesetzten Permanentmagneten;
- Figur 8: eine räumliche Darstellung einer Rotoranordnung der Synchronmaschine gemäß Figur 6 ohne Permanentmagneten;
- Figuren 9a, 9b: Blechlamellen zum Aufbau der Rotoranordnung der Figur 8;
- Figuren 10a, 10b: eine schematische Darstellung eines Bereichs der Rotoranordnung mit einem Querschnitt durch die Tasche bei verschiedenen Positionierungen des Permanentmagneten;
- Figur 11: ein Flußdiagramm zur Darstellung eines Verfahrens zur Kalibrierung einer elektrischen Maschine;
- Figur 12: ein Diagramm zur Darstellung des Verlaufs des Maximalwerts des Statorzahnflusses über der Remanenz der verwendeten Permanentmagneten;
- Figur 13: ein Diagramm zur Darstellung der Überlappung der Rotorausnehmung durch die Polfläche des Permanentmagneten über der Remanenz der Permanentmagneten;
- Figur 14: die Drehmomentverläufe bei einer elektrischen Maschine der Figur 6 bei Permanentmagneten mit verschiedenen Remanenzen;
- Figur 15a-c: verschiedenen Anordnungen der Rotorausnehmungen in Rotoranordnungen für Synchronmotoren.

### Beschreibung von Ausführungsformen

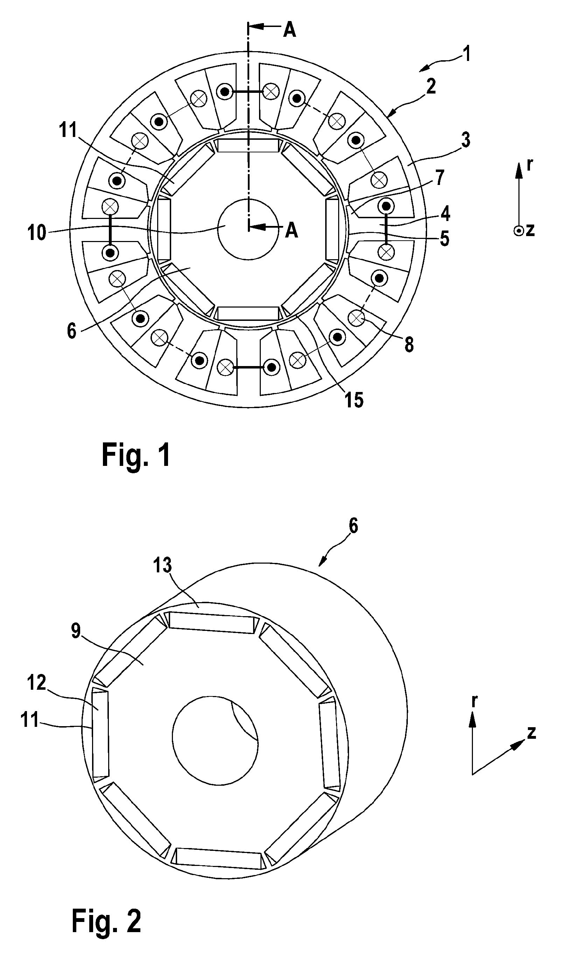

Figur 1 zeigt eine Querschnittsdarstellung durch einen Synchronmotor 1. Der Synchronmotor 1 ist als dreiphasiger Synchronmotor mit zwölf Statorzähnen 4 und acht Rotorpolen ausgebildet. Der Synchronmotor 1 umfasst einen Statoranordnung 2, die einen Statorkörper 3 und an dem Statorkörper 3 ausgebildete Statorzähne 4 aufweist. Der Statorkörper 3 ist kreiszylinderförmig ausgebildet und umschließt einen Innenraum 5, in dem ein Rotor 6 drehbeweglich angeordnet ist.

Die Statorzähne 4 sind äquidistant an dem Statorkörper 3 ausgebildet und weisen mit ihren in radialer Richtung nach innen gerichteten Enden zur Drehachse des Rotors 6. An den nach innen gerichteten Enden der Statorzähne 4 sind Zahnköpfe 7 vorgesehen, die verbreitert ausgebildet sind und an ihren zur Drehachse gerichteten Außenfläche eine kreissegmentförmige Kontur in Umfangsrichtung der Drehung des Rotors 6 aufweisen, um sich an den Verlauf einer Außenfläche des Rotors 6 anzupassen. Die Statorzähne 4 sind mit Einzelwicklungen 8 versehen, deren Wicklungssinn in Figur 1 angegeben ist. Zwischen der Außenfläche des Rotors 6 und der Kontur der Zahnköpfe 7 ist ein Luftspalt 15 vorgesehen. Der Rotor 6 dreht sich um eine Rotorwelle 10, die drehbar gelagert ist.

In Figur 2 ist eine räumliche Darstellung des Rotors 6 dargestellt. Der Rotor 6 weist im gezeigten Ausführungsbeispiel einen Rotorkörper 9 mit quaderförmigen Taschen 11 bzw. Taschen 11 mit einem senkrecht zur axialen Richtung trapezförmigen Querschnitt auf, die sich in Umfangsrichtung (tangential zur Drehachse) und in axialer Richtung der Drehachse erstrecken, um entsprechend geformte Permanentmagneten 12 zum Bereitstellen eines Erregermagnetfelds aufzunehmen. Die Taschen 11 liegen im Inneren des Rotors 6, so dass in radialer Richtung nach außen (der Drehachse gegenüberliegenden Seite) über den Taschen 11 ein Rotorpolschuh 13 ausgebildet ist. Im vorliegenden Ausführungsbeispiel definieren die Bereiche des Rotorkörpers 9, die in radialer Richtung oberhalb der einzelnen Taschen 11 liegen, jeweils einen Rotorpolschuh 13.

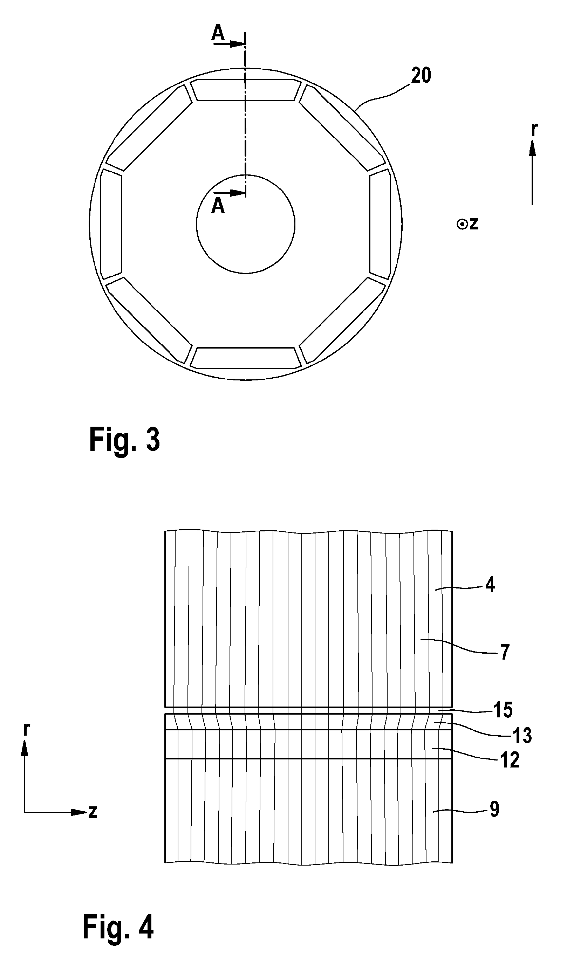

Beim Aufbau des Rotorkörpers 9 des Synchronmotors 1 können die in Figur 3 schematisch dargestellten Blechlamellen 20 verwendet werden. Diese werden durch Stanzen hergestellt, so dass sie der Querschnittsfläche des herzustellenden Rotorkörpers entsprechen. Die Blechlamellen 20 werden so aufeinander gestapelt, dass sich Taschen 11 in axialer Richtung ausbilden. Nach dem Stapeln der Blechlamellen 20 werden diese verklebt oder in sonstiger Weise miteinander verbunden und in die Taschen 11 werden die Permanentmagneten 12 eingesetzt, die zuvor mit den entsprechenden Abmessungen der Taschen 11 bereitgestellt oder gefertigt worden sind. Dort werden die Permanentmagneten 12 fixiert, beispielsweise durch Kleben, Klemmen oder dergleichen. Die Permanentmagneten 12 werden beim Einsetzen in die Taschen 11 mit ihren Magnetpolen in radialer Richtung ausgerichtet, wobei die Polung in Umfangsrichtung benachbarter Permanentmagneten 12 entgegengesetzt ist.

In Figur 4, die einen Ausschnitt aus einer Schnittansicht entlang der Schnittlinie A-A durch eine der Taschen 11 des Rotors 6 darstellt, erkennt man Feldlinien des sich ausbildenden magnetischen Felds. Die Schnittansicht zeigt den Rotor 6 in axialer Richtung z und in radialer Richtung r und man erkennt den Rotorkörper 9, den Permanentmagneten 12, den Rotorpolschuh 13, den Luftspalt 15 und den Zahnkopf 7 eines Statorzahns 4. Man erkennt, dass die Feldlinien im Inneren des Rotors 6 und des Statorzahns 4 im Wesentlichen annähernd parallel zueinander verlaufen.

Beim Aufbau eines solchen Synchronmotors 1 werden in der Regel Permanentmagneten 12 verwendet, die aus einem Block eines magnetischen Materials wie beispielsweise einer Neodym-Eisen-Bor-Legierung herausgearbeitet werden, z.B. durch Schneiden oder Fräsen. Bei diesem Permanentmagnetmaterial kann ein Remanenzunterschied von ± 3 % auftreten. Somit kann es vorkommen, dass die Permanentmagneten 12 bei verschiedenen Synchronmotoren 1 aus verschiedenen Losen stammen und somit bezüglich ihrer Remanenz eine Streuung aufweisen.

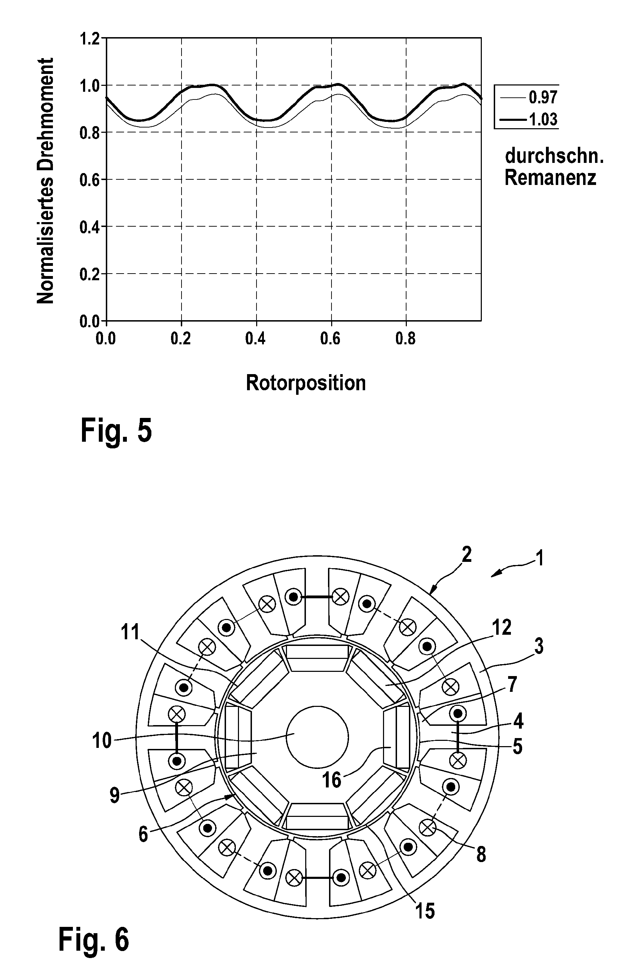

Die Auswirkung der Streuung der Permanentmagneten 12 ist im Diagramm der Figur 5 schematisch dargestellt. Das Diagramm der Figur 5 zeigt das normalisierte Drehmoment über der Rotorposition für einen Permanentmagneten, dessen Remanenz 3 % geringer ist als die durchschnittliche Remanenz, und für Permanentmagneten 12, dessen Remanenz 3 % höher als die durchschnittliche Remanenz ist. Man erkennt deutliche Abweichungen der Drehmomentverläufe der Synchronmaschine 1.

In Figur 6 ist eine Synchronmaschine 1 dargestellt, bei der Unterschiede der Remanenzen der verwendeten Permanentmagneten 12 ausgeglichen werden sollen. Bei der Beschreibung der nachfolgenden Ausführungsform werden die gleichen Bezugszeichen verwendet, so dass gleiche Bezugszeichen Elemente gleicher oder vergleichbarer Funktion bezeichnen.

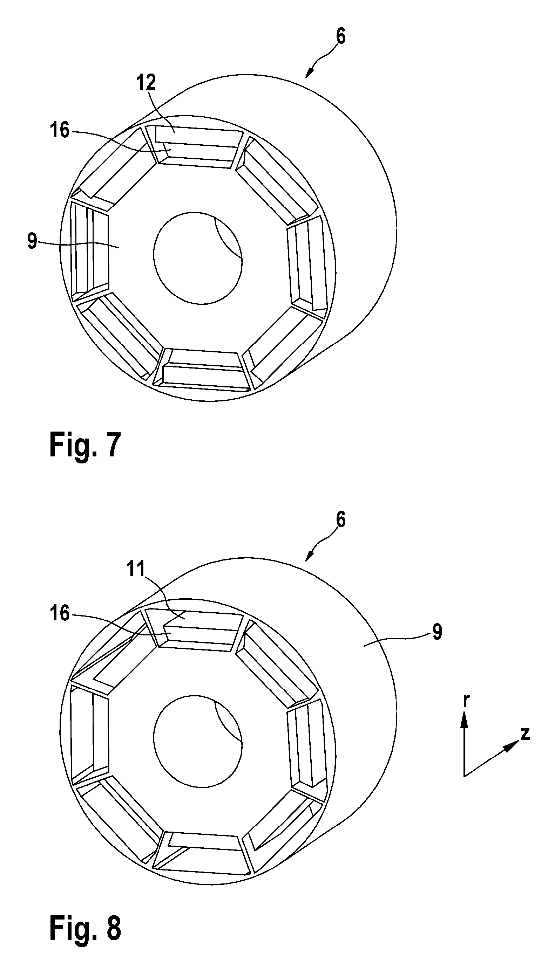

In Fig. 6 ist eine weitere Synchronmaschine 1 dargestellt. Gleiche Bezugszeichen kennzeichnen Elemente gleicher oder vergleichbarer Funktion. Die Synchronmaschine 1 der Figur 6 weist eine zu der in Figur 1 identischen Statoranordnung 2 und einen modifizierten Rotor 6 auf. Der Rotor 6, der in einer räumlichen Darstellung in Figur 7 ohne die Statoranordnung gezeigt ist, weist Taschen 11 auf, die entlang der axialen Richtung z mit verschiedenen Dicken in radialer Richtung r ausgebildet sind.

In Figur 7 ist erkennbar, dass an einem axialen Ende des Rotors 6 eine Rotorausnehmung 16 an einer Seite des Permanentmagneten 12 vorgesehen ist, der dem Rotorpolschuh 13 gegenüber liegt. Mit anderen Worten weist die Tasche 11 in axialer Richtung eine in radialer Richtung sich erstreckende Verbreiterung auf. Zwischen der Tasche 11, in die der Permanentmagnet 12 einsetzbar ist, und der Rotorwelle 10 befindet sich eine Rotorausnehmung 16, die sich vorzugsweise über die gesamte Breite des Permanentmagneten 12 in Umfangsrichtung (tangentiale Richtung bezüglich der Drehachse) und in axialer Richtung von einem Ende des Rotorkörpers 9 ins Innere des Rotors 6 hinein erstreckt. Die Tiefe der Rotorausnehmung 16 in axialer Richtung kann etwa 5 bis 20 % der axialen Länge des Permanentmagneten 12 bzw. der axialen Länge des Rotorkörpers 9 betragen.

In Figur 8 ist der Rotor 6 in einer räumlichen Darstellung ohne die Permanentmagneten 12 gezeigt. Man erkennt die Stufe, die innerhalb der Tasche 11 durch die zusätzliche Rotorausnehmung 16 gebildet wird.

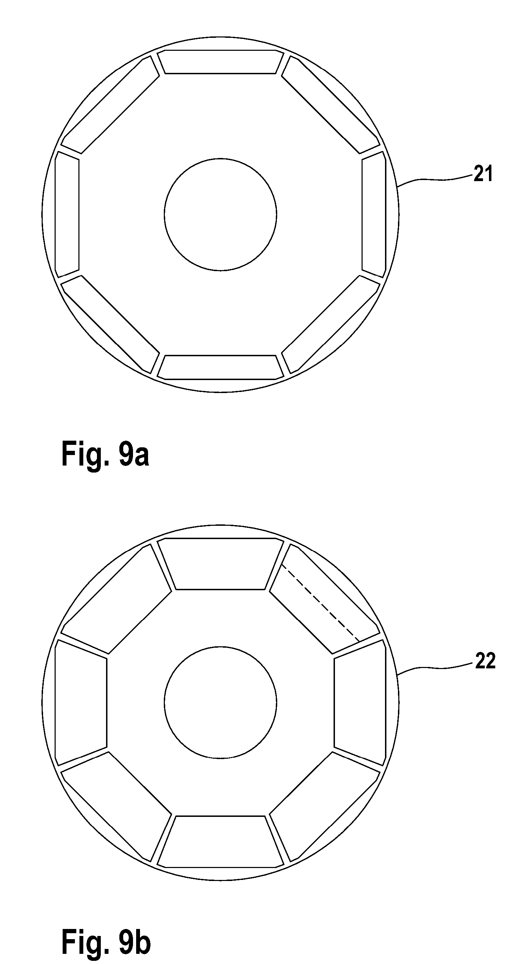

In den Figuren 9a und 9b sind zwei Formen für Blechlamellen 21, 22 zum Aufbau des Rotorkörpers 9 der Synchronmaschine 1 der Figur 6 dargestellt. Die Figur 9a zeigt eine erste Blechlamelle 21, die im Wesentlichen dafür vorgesehen ist, den Teil des Rotorkörpers 9 zu bilden, in dem keine Rotorausnehmung 16 vorgesehen ist. Figur 9b zeigt eine zweite Blechlamelle 22 mit vergrößerten Ausnehmungen, die zum Ausbilden der Tasche 11 an der axialen Position verwendet werden, an der die Tasche 11 mit der zusätzlichen Rotorausnehmung 16 versehen sein soll.

Zum Aufbau des Rotorkörpers 9 werden, wie zuvor in Verbindung mit Fig. 3 beschrieben, eine Anzahl von ersten Blechlamellen 21 gestapelt, so dass die Ausnehmungen für die Taschen 11 übereinander liegen. An einem Ende in axialer Richtung wird dann eine weitere Anzahl von zweiten Blechlamellen 22 auf diese Anordnung aufgesetzt, so dass sich dort an einem Ende des so gebildeten Rotorkörpers 6 eine vergrößerte Tasche aufgrund der Rotorausnehmung 16 ergibt.

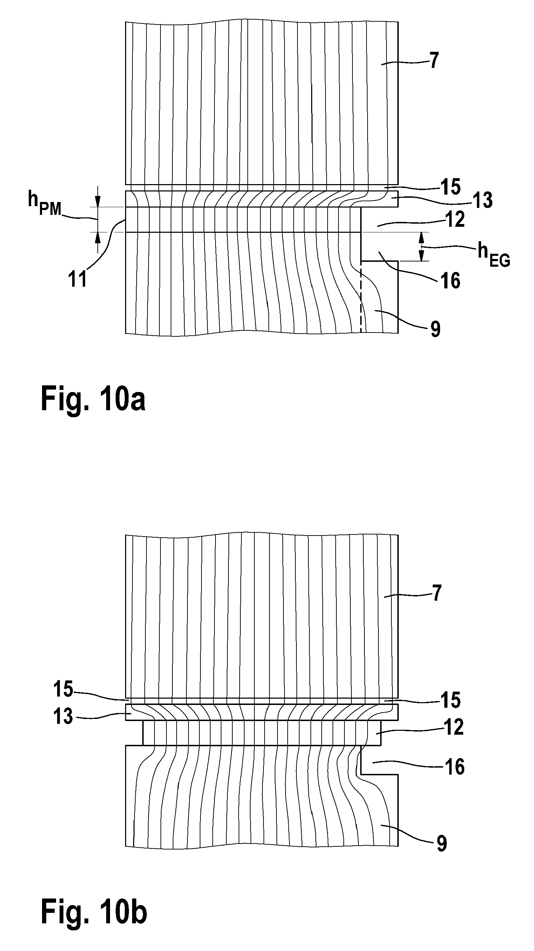

In den Figuren 10a und 10b sind Querschnittsdarstellungen in axialer z und radialer Richtung r durch eine Tasche 11 des Rotorkörpers 6 dargestellt. Man erkennt den Rotorkörper 9, den Permanentmagneten 12, den Rotorpolschuh 13, den Luftspalt 15 und den Zahnkopf 7 eines Statorzahns 4. In dem in Figur 10a gezeigten Fall schließt der Permanentmagnet 12 bündig mit einem ersten Ende des Rotorkörpers 9 ab und ragt nicht in den Bereich der Tasche 11 hinein, der durch die Rotorausnehmung 16 vergrößert ist. D.h. vorzugsweise weist der Permanentmagnet 12 eine Länge in axialer Richtung z auf, die der Länge der Tasche 11 ohne den Bereich der Rotorausnehmung 16 entspricht. Im Gegensatz dazu ist in Figur 10b der Fall gezeigt, bei dem der Permanentmagnet 12 in der Tasche 11 in axialer Richtung so gegenüber der Position der Figur 10a verschoben ist, dass er in den verbreiterten Bereich der Tasche 11 hineinragt. Auf diese Weise liegt nur ein Teil einer Polfläche des Permanentmagneten 12, die einen Magnetpol ausbildet, direkt an dem Rotorkörper 9 über die Kopplungsfläche an und ein kleinerer Anteil der Polfläche des Permanentmagneten 12 liegt über der Rotorausnehmung 16, so dass in Polrichtung ein Luftspalt in Richtung der Drehachse wirkt.

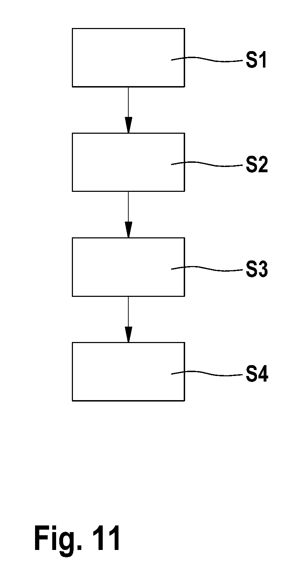

In Figur 11 ist ein Verfahren zum Herstellen einer elektrischen Maschine dargestellt. Zum Herstellen der elektrischen Maschine wird in Schritt S1 zunächst der Rotorkörper durch Stapeln von Blechlamellen 21, 22 aufgebaut. Dazu werden, wie zuvor beschrieben, zunächst die ersten Blechlamellen 21 und anschließend auf den Stapel der ersten Blechlamellen 21 eine Anzahl der zweiten Blechlamellen 22 aufgesetzt und miteinander fixiert. Dadurch werden Taschen 11 ausgebildet, die einen ersten Abschnitt in axialer Richtung z aufweisen, in dem ein eingesetzter Permanentmagnet 12 unmittelbar mit seiner Polfläche an dem Rotorkörper 9 anliegt und einen zweiten Abschnitt in axialer Richtung z, an dem ein eingesetzter Permanentmagnet 12 je nach dessen Position mit seiner Polfläche in den Rotorausnehmung 16 hineinragt. In einem nächsten Schritt S2 werden die Permanentmagneten 12 vermessen, um deren jeweilige Remanenz festzustellen. Abhängig von der Remanenz jedes Permanentmagneten wird entsprechend einem Kennfeld in Schritt S3 eine Positionierungsangabe bestimmt, die angibt, wie weit der betreffende Permanentmagnet 12 mit dem zweiten Abschnitt die Rotorausnehmung 16 in axialer Richtung z überlappt. Entsprechend dieser Positionsangabe wird in Schritt S4 der Permanentmagnet 12 in die Tasche 11 eingesetzt und entsprechend der Positionierungsangabe hinsichtlich der Rotorausnehmung 16 positioniert.

Die Dicke der Rotorausnehmung 16 entspricht vorzugsweise der Dicke der Tasche 11 in radialer Richtung. Mit anderen Worten weist die Tasche 11 in ihrem ersten Abschnitt eine erste Dicke h und in dem zweiten Abschnitt eine vergrößerte Dicke von z.B. 2h auf. Im Allgemeinen sollte die Dicke der Tasche 11 im Bereich der Rotorausnehmung 16 das 1,5 bis 2,5-fache der Dicke der Tasche 11 im ersten Abschnitt betragen.

Die Länge des ersten Abschnitts der Tasche 11 in axialer Richtung beträgt 75 bis 95 Prozent der Länge des gesamten Rotorkörpers 9, vorzugsweise 80 bis 90 Prozent, insbesondere 87 Prozent, während die Länge des zweiten Abschnitts der Tasche 11, der dem Abschnitt entspricht, in dem die verbreiterte Tasche 11 ausgebildet ist, 5 bis 25 %, insbesondere 10 bis 20 %, vorzugsweise 13 Prozent, der Länge des gesamten Rotorkörpers 9 in axialer Richtung entspricht.

Es ist vorzugsweise vorgesehen, dass bei Permanentmagneten 12, deren Remanenz einer Sollremanenz entspricht, die Überlappung der Aufsatzfläche des Permanentmagneten 12 mit dem zweiten Abschnitt der Rotorausnehmung 16 50 % entspricht, so dass bei positiver wie auch negativer Abweichung der Remanenz des einzusetzenden Permanentmagneten 12 eine Verschiebung in positiver bzw. negativer Richtung bezüglich des zweiten Abschnitts der Rotorausnehmung 16 vorgenommen werden kann. Mit anderen Worten wird die Überlappung vergrößert, wenn die Remanenz des Permanentmagneten 12 die Sollremanenz übersteigt und umgekehrt.

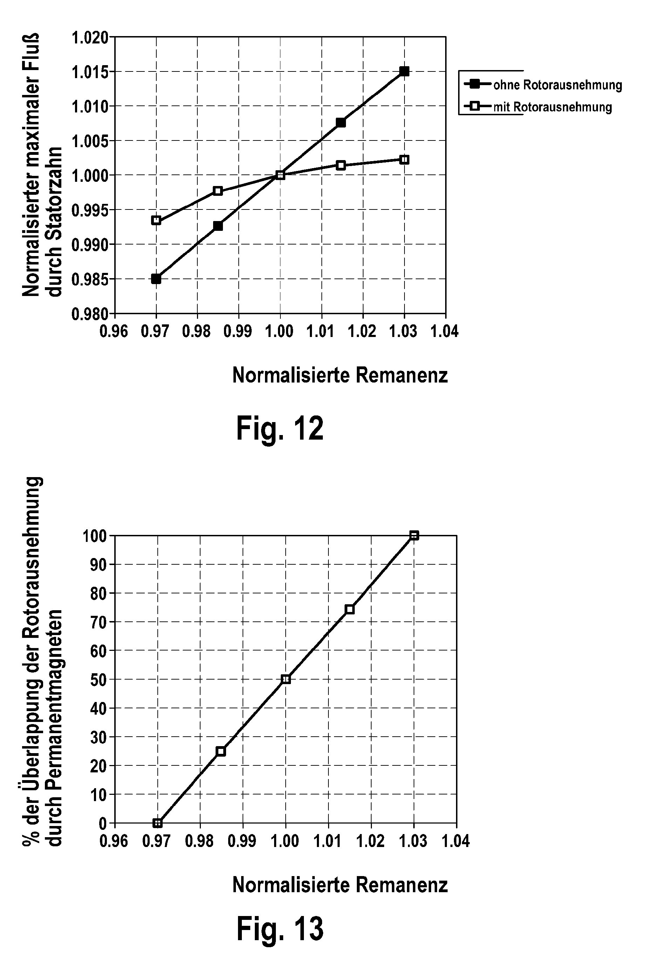

In Figur 12 ist ein Diagramm dargestellt, das den magnetischen Fluss durch den Statorzahn 4 über Remanenzen der Permanentmagneten 12 bei einem Synchronmotor der Figur 1 ohne Rotorausnehmung 16 und beim Synchronmotor der Figur 6 mit Rotorausnehmung 16 im Vergleich zeigt. Man erkennt, dass bei entsprechender Kalibrierung des Permanentmagneten, d.h. Positionierung des Permanentmagneten 12 abhängig von seiner Remanenz, in der Tasche 11 eine wesentlich geringere Abhängigkeit des magnetischen Flusses durch den Statorzahn 4 von der Remanenz der Permanentmagneten 12 erreicht wird.

Die Einstellung der Position des Permanentmagneten 12 in der Tasche 11 ist im Wesentlichen linear zur Remanenz, wie aus dem Diagramm der Figur 13 entnommen werden kann. Das heißt eine Berechnung, bis zu welchem Maß eine Überlappung der Rotorausnehmung 16 durch die Polfläche des Permanentmagneten 12 erfolgen soll, ist einfach durchzuführen.

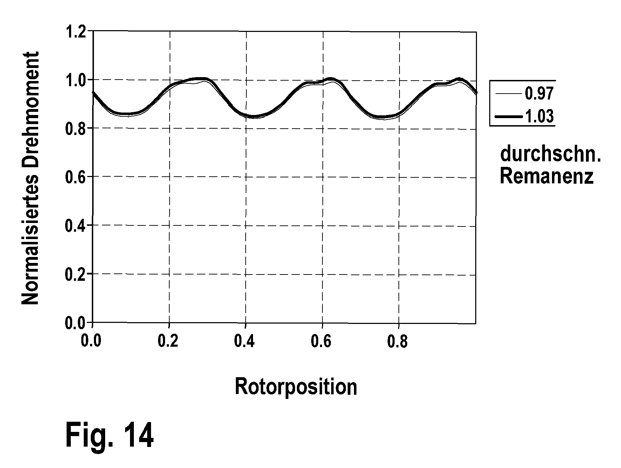

In Figur 14 sind die Drehmomentverläufe bei Synchronmaschinen mit Permanentmagneten verschiedener Remanenzen dargestellt, bei denen die Permanentmagneten abhängig von ihrer Remanenz in der Tasche 11 angeordnet sind. Man erkennt, im Vergleich zu dem Diagramm der Figur 5, eine wesentlich verringerte Abhängigkeit von der Remanenzstreuung der Permanentmagneten 12 bei der Ausführungsform der Figur 6 gegenüber dem Synchronmotor 1 gemäß dem Stand der Technik.

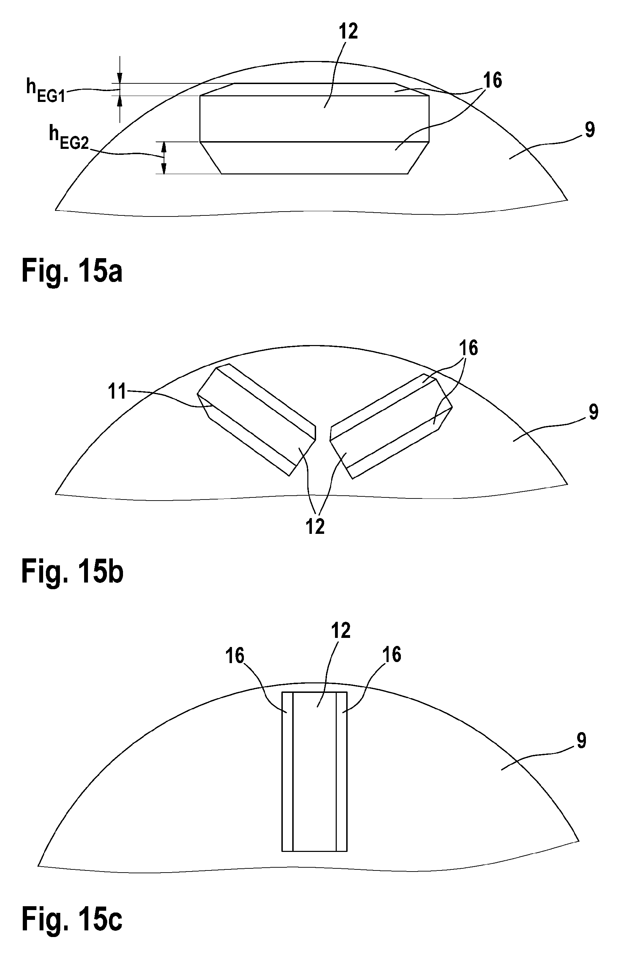

Im Gegensatz zu der Ausführungsform der Figur 6 können die Permanentmagneten 12 in dem Rotor 6 auch auf andere Weise angeordnet sein. Es kann, wie in Fig. 15a dargestellt ist, vorgesehen sein, dass Rotorausnehmungen 16 auf beiden Seiten des Permanentmagneten 12 vorgesehen sind, die in axialer Richtung die gleiche Länge oder verschiedene Längen aufweisen. Sowohl eine Rotorausnehmung 16 in radialer Richtung oberhalb (d.h. nach außen) als auch unterhalb (d.h. nach innen) können das magnetische Feld, das über die Polschuhe 13 in Richtung des Stators 2 abgegeben wird, beeinflussen und eignen sich somit zum Ausgleichen von Remanenzunterschieden der Permanentmagnete 12. Weitere Beispiele sind in den Figuren 15b und 15c dargestellt. In Fig. 15b ist eine Schrägstellung der Taschen 11 in dem Rotor 6 dargestellt, wobei Rotorausnehmungen 16, die sich nur über einen Teil der axialen Richtung z erstrecken auf der Seite der Tasche 11, die zu dem Polschuh 13 gerichtet ist, und/oder auf der entgegengesetzten Seite der Tasche 11 angeordnet ist. Weiterhin sind in Fig. 15c die darin angeordneten Permanentmagneten 12 bzw. die Taschen 11 in einer Speichenanordnung angeordnet, bei der Polflächen der Permanentmagneten 12 sich parallel zur radialen und axialen Richtung erstrecken. Auch hier sind die Rotorausnehmungen 16 vorzugsweise beidseitig an den Polflächen der Permanentmagneten 12 angeordnet.

Wenn Rotorausnehmungen 16 beidseitig des jeweiligen Permanentmagneten 12 vorgesehen werden sollen, ist es ausreichend, dass die Rotorausnehmungen 16 jeweils eine Dicke aufweisen, die im Bereich von 0,25 bis 0,75, vorzugsweise 0,5, der Dicke des Permanentmagneten liegen. Auch sind Rotorausnehmungen beidseitig des Permanentmagneten 12 denkbar, die verschiedene Dicken aufweisen.

## Patentansprüche

1. Komponente (6) für eine elektrische Maschine (1) mit einem Körper (9) aus einem magnetischen Material, wobei mindestens eine sich in axialer Richtung erstreckenden Tasche (11) in dem Körper (9) vorgesehen ist, die eine Kopplungsfläche aufweist, um ein Erregermagnetfeld außerhalb des Körpers (9) bereitzustellen, wobei in die Taschen eingesetzte Permanentmagnete (12) mit ihren Polflächen an den Kopplungsflächen anlegbar sind;
wobei die Tasche (11) an einem Ende des Körpers bezüglich einer axialen Richtung (z) eine Verbreiterung (16) in einer Richtung senkrecht zur Kopplungsfläche aufweist, so dass ein einzusetzender Permanentmagnet (12) je nach Positionierung in der Tasche (11) mit einem variablen Anteil einer seiner Polflächen in die Verbreiterung (16) hineinragt, **dadurch gekennzeichnet, dass** die Position eines Permanentmagneten (12) in der Tasche (11) abhängig von seiner Remanenz gewählt ist.

2. Komponente (6) nach Anspruch 1, wobei die Tasche (11) zumindest an einem der Enden des Körpers (9) in axialer Richtung (z) nach außen offen ist.

3. Komponente (6) nach Anspruch 1 oder 2, wobei die Verbreiterung (16) der Tasche (11) einseitig oder zweiseitig vorgesehen ist.

4. Komponente (6) nach einem der Ansprüche 1 bis 3, wobei die Verbreiterung (16) als ein Abschnitt der Tasche vorgesehen ist, der von der Kopplungsfläche stufenförmig abgesetzt ist, und insbesondere die Verbreiterung (16) durch eine bestimmte Anzahl von Lamellenblechen realisiert ist, bei denen ein größerer Taschenquerschnitt ausgeschnitten ist.

5. Komponente (6) nach einem der Ansprüche 1 bis 4 mit dem Permanentmagneten (12), der in der Tasche (11) angeordnet ist, um das Erregermagnetfeld bereitzustellen, wobei zumindest ein Teil der Polfläche des Permanentmagneten (12) an der Kopplungsfläche anliegt;
wobei die Tasche (11) in der axialen Richtung länger ist als der in der Tasche (11) angeordnete Permanentmagnet (12), und wobei der Permanentmagnet (12) in der axialen Richtung positionierbar ist, um den Anteil der Polfläche, der in die Verbreiterung (16) hineinragt, festzulegen.

6. Komponente (6) nach Anspruch 1 bis 5, wobei der Permanentmagnet (12) in der Tasche (11) nach dessen Positionierung fixiert ist.

7. Komponente (6) nach einem der Ansprüche 1 bis 6, wobei die Komponente (6) einem Läufer (6) der elektrischen Maschine (1) entspricht, wobei die Komponente (6) einen dem Permanentmagneten (12) zugeordneten Polschuh (13) an der Umfangfläche des Läufers (6) zur Abgabe des Magnetfelds aufweist, wobei die Verbreiterung (16) der Tasche (11) auf einer Seite erfolgt, die einer dem Polschuh (13) zugewandten Seite der Tasche (11) gegenüberliegt.

8. Komponente (6) nach Anspruch 7, wobei die Komponente einem Rotor (6) einer Synchronmaschine (1) entspricht, wobei die Polflächen der Permanentmagnete (12) mit Polflächen tangential zur Umfangsrichtung oder parallel zur Radialrichtung (r) (Speichenmagnete) oder bezüglich des Polschuhs (13) geneigt angeordnet sind.

9. Elektrische Maschine (1), insbesondere eine Synchronmaschine, mit einer Komponente nach einem der Ansprüche 1 bis 8.

10. Verfahren zum Kalibrieren einer elektrischen Maschine (1), mit folgenden Schritten:
- Bereitstellen einer Komponente (6) nach einem der Ansprüche 1 bis 4;
- Ermitteln der Remanenz eines in die Tasche (11) der Komponente (6) einzusetzenden Permanentmagneten (12);
- Einsetzen des Permanentmagneten in die Tasche (11), so dass ein von der ermittelten Remanenz abhängiger Anteil seiner Polfläche in die Verbreiterung hineinragt.

11. Verfahren nach Anspruch 10, wobei die ermittelte Remanenz des Permanentmagneten (12) mit einem Referenzwert verglichen wird, wobei der Referenzwert einer Positionierung des Permanentmagneten (12) in der Tasche entspricht bei der ein vorbestimmter Anteil der entsprechenden Polfläche in die Verbreiterung (16) hineinragt, wobei bei einem Überschreiten des Referenzwertes durch die ermittelte Remanenz der Anteil der entsprechenden Polfläche, der in die Verbreiterung (16) hineinragt, vergrößert wird, und bei einem Unterschreiten des Referenzwertes durch die ermittelte Remanenz der Anteil der entsprechenden Polfläche, der in die Verbreiterung (16) hineinragt, verringert wird.

12. Verfahren nach Anspruch 11, wobei das Maß des Vergrößerns bzw. des Verkleinems des Anteils der entsprechenden Polfläche abhängig von der Differenz zwischen der ermittelten Remanenz und dem Referenzwert gewählt wird.

## Claims

1. Component (6) for an electrical machine (1) comprising a body (9) composed of a magnetic material, wherein at least one pocket (11) extending in an axial direction is provided in the body (9), said at least one pocket having a coupling surface in order to provide an excitation magnetic field outside the body (9), wherein permanent magnets (12) inserted into the pockets can be placed on the coupling surfaces by their pole surfaces;
wherein the pocket (11) has a widening (16) in a direction perpendicular to the coupling surface at one end of the body relative to an axial direction (z), such that a permanent magnet (12) to be inserted projects into the widening (16) with a variable proportion of one of its pole surfaces depending on the positioning in the pocket (11), **characterized in that** the position of a permanent magnet (12) in the pocket (11) is chosen depending on the remanence of said permanent magnet.

2. Component (6) according to Claim 1, wherein the pocket (11) is open outwardly in an axial direction (z) at least at one of the ends of the body (9).

3. Component (6) according to Claim 1 or 2, wherein the widening (16) of the pocket (11) is provided on one side or on two sides.

4. Component (6) according to any of Claims 1 to 3, wherein the widening (16) is provided as a section of the pocket that is offset from the coupling surface in a stepped fashion, and in particular the widening (16) is realized by a specific number of laminated metal sheets in which a larger pocket cross section is cut out.

5. Component (6) according to any of Claims 1 to 4 comprising the permanent magnet (12) arranged in the pocket (11) in order to provide the excitation magnetic field, wherein at least one part of the pole surface of the permanent magnet (12) bears on the coupling surface; wherein the pocket (11) is longer in the axial direction than the permanent magnet (12) arranged in the pocket (11), and wherein the permanent magnet (12) can be positioned in the axial direction in order to define that proportion of the pole surface which projects into the widening (16).

6. Component (6) according to Claims 1 to 5, wherein the permanent magnet (12) is fixed in the pocket (11) after the positioning of said permanent magnet.

7. Component (6) according to any of Claims 1 to 6, wherein the component (6) corresponds to a rotor (6) of the electrical machine (1), wherein the component (6) has a pole shoe (13) assigned to the permanent magnet (12) on the circumferential surface of the rotor (6) for emitting the magnetic field, wherein the widening (16) of the pocket (11) is effected on a side opposite a side of the pocket (11) facing the pole shoe (13).

8. Component (6) according to Claim 7, wherein the component corresponds to a rotor (6) of a synchronous machine (1), wherein the pole surfaces of the permanent magnets (12) are arranged with pole surfaces tangentially with respect to the circumferential direction or parallel to the radial direction (r) (spoke magnets) or in an inclined manner relative to the pole shoe (13).

9. Electrical machine (1), in particular a synchronous machine, comprising a component according to any of Claims 1 to 8.

10. Method for calibrating an electrical machine (1), comprising the following steps:
- providing a component (6) according to any of Claims 1 to 4;
- determining the remanence of a permanent magnet (12) to be inserted into the pocket (11) of the component (6);
- inserting the permanent magnet into the pocket (11), such that a proportion of the pole surface of said permanent magnet projects into the widening, said proportion being dependent on the remanence determined.

11. Method according to Claim 10, wherein the determined remanence of the permanent magnet (12) is compared with a reference value, wherein the reference value corresponds to a positioning of the permanent magnet (12) in the pocket for which a predetermined proportion of the corresponding pole surface projects into the widening (16), wherein that proportion of the corresponding pole surface which projects into the widening (16) is increased in the event of the determined remanence exceeding the reference value, and that proportion of the corresponding pole surface which projects into the widening (16) is decreased in the event of the determined remanence falling below the reference value.

12. Method according to Claim 11, wherein the extent of the increase or decrease in the proportion of the corresponding pole surface is chosen depending on the difference between the determined remanence and the reference value.

## Revendications

1. Composant (6) pour une machine électrique (1) avec un corps (9) constitué d'un matériau magnétique, dans lequel au moins une poche (11) s'étendant dans la direction axiale et présentant une surface d'accouplement est prévue dans le corps (9) pour mettre à disposition un champ magnétique d'excitation à l'extérieur du corps (9), dans lequel des aimants permanents (12) insérés dans les poches peuvent être appliqués avec leurs surfaces polaires sur les surfaces d'accouplement ;
dans lequel, à une extrémité du corps par rapport à une direction axiale (z), la poche (11) présente un élargissement (16) dans une direction perpendiculaire à la surface d'accouplement, de sorte qu'un aimant permanent (12) à insérer fait saillie dans l'élargissement (16) avec une part variable de l'une de ses surfaces polaires selon le positionnement dans la poche (11), **caractérisé en ce que** la position d'un aimant permanents (12) dans la poche (11) est choisie en fonction de sa rémanence.

2. Composant (6) selon la revendication 1, dans lequel la poche (11) est ouverte vers l'extérieur au moins à une extrémité du corps (9) dans la direction axiale (z).

3. Composant (6) selon la revendication 1 ou 2, dans lequel l'élargissement (16) de la poche (11) est prévu sur un côté ou sur deux côtés.

4. Composant (6) selon l'une des revendications 1 à 3, dans lequel l'élargissement (16) est conçu comme une section de la poche formant un retrait en gradin par rapport à la surface d'accouplement, et l'élargissement (16) étant en particulier réalisé par un certain nombre de tôles à lamelles, pour lesquelles une section transversale de poche plus grande est découpée.

5. Composant (6) selon l'une des revendications 1 à 4, avec l'aimant permanent (12) agencé dans la poche (11) pour mettre à disposition le champ magnétique d'excitation, dans lequel au moins une partie de la surface polaire de l'aimant permanent (12) s'applique sur la surface d'accouplement ;
dans lequel la poche (11) est plus longue dans la direction axiale que l'aimant permanent (12) disposé dans la poche (11), et dans lequel l'aimant permanent (12) peut être positionné dans la direction axiale pour fixer la part de la surface polaire faisant saillie dans l'élargissement (16).

6. Composant (6) selon l'une revendications 1 à 5, dans lequel l'aimant permanent (12) est fixé dans la poche (11) après le positionnement de celui-ci.

7. Composant (6) selon l'une des revendications 1 à 6, le composant (6) correspondant à un rotor (6) de la machine électrique (1), le composant (6) présentant une pièce polaire (13) attribuée à l'aimant permanent (12) sur la surface périphérique du rotor (6), destinée à fournir le champ magnétique, l'élargissement (16) de la poche (11) étant prévu sur un côté opposé au côté de la poche (11) tourné vers la pièce polaire (13).

8. Composant (6) selon la revendication 7, dans lequel le composant correspond à un rotor (6) d'une machine synchrone (1), les surfaces polaires de l'aimant permanent (12) étant agencées avec leurs surfaces polaires tangentiellement à la direction périphérique ou parallèlement à la direction radiale (r) (aimants de rayon) ou de façon inclinée par rapport à la pièce polaire (13).

9. Machine électrique (1), en particulier une machine synchrone, avec un composant selon l'une des revendications 1 à 8.

10. Procédé d'étalonnage d'une machine électrique (1), avec les étapes suivantes :
- mise à disposition d'un composant (6) selon l'une des revendications 1 à 4 ;
- détermination de la rémanence d'un aimant permanent (12) destiné à être inséré dans la poche (11) du composant (6) ;
- insertion de l'aimant permanent dans la poche (11), de manière à ce qu'une part de sa surface polaire dépendante de la rémanence déterminée fasse saillie dans l'élargissement.

11. Procédé selon la revendication 10, dans lequel la rémanence déterminée de l'aimant permanent (12) est comparée avec une valeur de référence, la valeur de référence correspondant à un positionnement de l'aimant permanent (12) dans la poche, avec lequel une part prédéfinie de la surface polaire correspondante fait saillie dans l'élargissement (16), la part de la surface polaire faisant saillie dans l'élargissement (16) étant augmentée lorsque la rémanence déterminée est supérieure à la valeur de référence, et la part de la surface polaire faisant saillie dans l'élargissement (16) étant diminuée lorsque la rémanence déterminée est inférieure à la valeur de référence.

12. Procédé selon la revendication 11, dans lequel le degré d'augmentation ou de diminution de la part de la surface polaire correspondante est choisi en fonction de la différence entre la rémanence déterminée et la valeur de référence.
